# FASCICULE DE BREVET EUROPEEN

(11) **EP 0 809 367 B1**
(45) Date de publication et mention de la délivrance du brevet: **15.09.2004**
(21) Numéro de dépôt: 97410053.9
(22) Date de dépôt: 22.05.1997
(51) Int. Cl.: H04B 10/10, H04L 27/04

(54) **Procédé et dispositif programmable de génération de trains d'impulsions de largeur variable**
Verfahren und programmierbare Einrichtung zur Erzeugung von Impulsfolgen veränderlicher Breite
Method and programmable apparatus for the production of trains of pulses with variable width

(30) Priorité: 24.05.1996 FR 9606689
(43) Date de publication de la demande: 26.11.1997
(73) Titulaire: STMicroelectronics S.A., 92120 Montrouge (FR)
(72) Inventeur: Prunier, Jacques, 38360 Sassenage (FR); Lusinchi, Laurent, 38120 Saint Egreve (FR)
(74) Mandataire: de Beaumont, Michel

(56) Documents cités:
- WO-A-90/03072
- US-A- 4 959 810
- US-A- 4 999 622
- US-A- 5 291 154
- US-A- 5 319 487
- US-A- 5 424 858
- "Low-power remote control IR transmitter and receiver preamplifiers" PHILIPS TECHNICAL PUBLICATION, no. 167, 22 mars 1985, pages 1-8, XP002025432

## Description

La présente invention concerne la génération de trains d'impulsions au moyen d'un microprocesseur. Elle concerne plus particulièrement la génération de trains de largeur variable d'impulsions numériques de fréquence variable, les largeurs respectives des trains et des impulsions étant programmables au moyen d'une unité centrale de traitement d'un microprocesseur. Une telle génération de trains d'impulsions sert, par exemple, dans des télécommandes à infrarouge pour piloter des diodes d'émission infrarouge, la séquence dans laquelle sont générés les trains d'impulsions et/ou leur nombre d'impulsions constituant un code de commande propre à être décodé par un récepteur des signaux infrarouges émis.

Plus généralement, la présente invention s'applique à la génération d'une séquence d'impulsions discontinue pour laquelle on souhaite programmer, à la fois, la fréquence des impulsions et la largeur des trains ou séries d'impulsions successives.

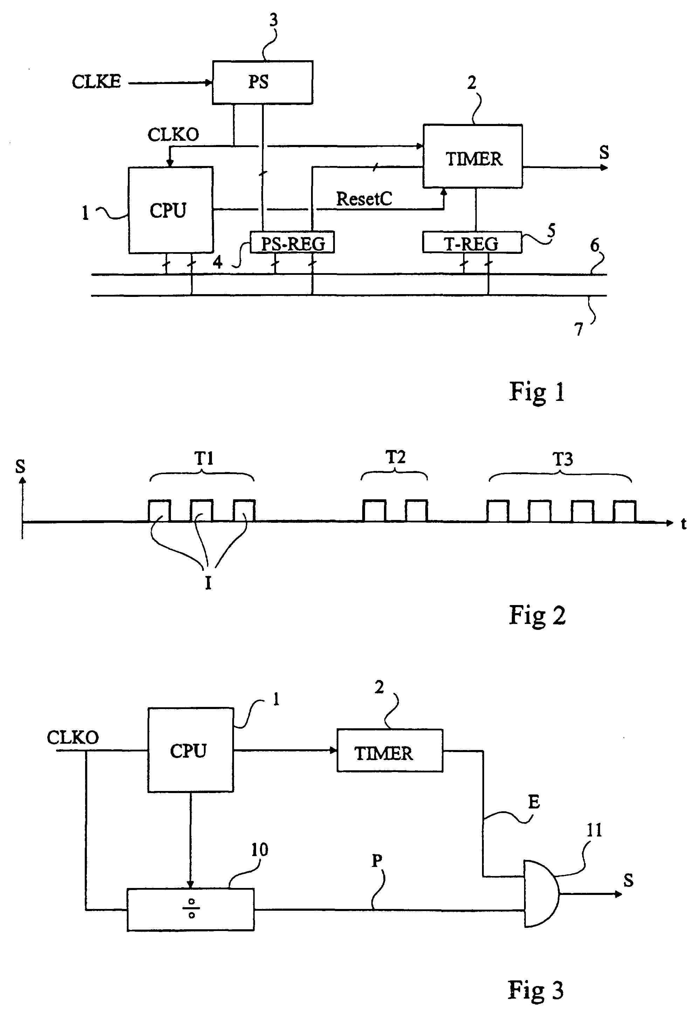

La figure 1 représente, partiellement et sous forme de schéma-bloc, un exemple de réalisation classique d'un générateur programmable de trains d'impulsions.

Un tel générateur comporte une unité centrale de traitement (CPU) 1 chargée d'exécuter un programme d'instructions préalablement stocké dans une mémoire (non représentée). L'unité centrale de traitement 1 est classiquement associée à un compteur programmable (TIMER) 2 pouvant servir de base de temps pour des échanges entre le microprocesseur et un périphérique externe, par exemple, une diode d'émission infrarouge (non représentée).

L'unité centrale 1 est également associée à un diviseur de fréquence préliminaire (prescaler) 3 dont le rôle est de mettre en forme une horloge externe CLKE et de délivrer, notamment à l'unité 1 et au compteur 2, une horloge de travail CLK0. Le diviseur PS 3 est programmable par l'intermédiaire d'un premier registre (PS-REG) 4 pour fixer le taux de division de l'horloge externe CLKE et, ainsi, la fréquence de travail de l'unité centrale 1.

Le compteur 2 est programmable depuis l'unité centrale 1 par l'intermédiaire de certains bits du registre 4 et d'un deuxième registre (T-REG) 5. La fréquence de comptage est donnée par le signal d'horloge CLK0.

L'unité centrale 1 communique avec les registres 4 et 5 par l'intermédiaire de bus d'adresses 6, de données 7 et de commande (non représenté). Bien que cela n'ait pas été représenté pour des raisons de clarté, l'unité centrale 1 communique également par l'intermédiaire des bus avec le compteur 2 pour en assurer la commande ainsi qu'avec d'autres éléments classiques (non représentés) du microprocesseur.

Le compteur 2 est, par exemple, constitué d'un compteur numérique à bascules (non représentées) associé à un comparateur (non représenté) qui compare la valeur délivrée par le compteur à bascules avec un seuil enregistré dans le registre 5. Lorsque le seuil est atteint, le compteur 2 positionne son signal de sortie S dans un état haut ou bas en fonction de l'état d'un bit de contrôle contenu dans le registre 4. Le compteur 2 est initialisé par un signal ResetC provenant de l'unité 1.

La figure 2 représente, sous forme de chronogrammes, un exemple de séquence S de trains d'impulsions obtenue au moyen d'un générateur tel que représenté à la figure 1. La séquence S est ici constituée de trois trains T1, T2 et T3 comportant respectivement trois, deux et quatre impulsions I. Les fronts montants et descendants de chaque impulsion I sont générés par le circuit tel que représenté à la figure 1, c'est-à-dire que pour chaque changement d'état du signal S, l'unité 1 doit charger dans les registres 4 et 5, respectivement, un bit de contrôle indiquant l'état haut ou bas que doit prendre le signal S à l'issue du comptage et un seuil de comptage déterminant la position dans le temps du front suivant. Dans l'exemple représenté, toutes les impulsions I ont la même largeur. La largeur et la fréquence des impulsions doivent cependant pouvoir être ajustées. Dans l'application aux télécommandes à infrarouge, la fréquence des impulsions est généralement constante pour une même séquence de trains. De plus, la largeur des impulsions correspond généralement à un facteur de forme (largeur d'une impulsion rapportée à la période) compris entre 30 et 50 %, fixé pour toute la séquence.

Le signal CLK0 n'a pas été représenté à la figure 2. On notera que la fréquence du signal CLK0 est nettement supérieure à la fréquence des impulsions I d'un train. En effet, l'unité 1 doit effectuer deux cycles de programmation des registres 4 et 5 entre chaque front du signal S et un cycle de programmation nécessite plusieurs cycles d'horloge.

Un inconvénient d'un générateur classique tel que représenté à la figure 1 est que le besoin d'écrire dans les registres 4 et 5, préalablement à chaque front souhaité du signal S, occupe considérablement l'unité de centrale de traitement 1. Celle-ci n'est alors pas disponible pour effectuer d'autres tâches.

Le document US-A-5 319 487 décrit un générateur de trains d'impulsions dans lequel un signal d'enveloppe est modulé par une porteuse de fréquence fixe. Cette porteuse est générée indépendamment du signal d'enveloppe qui est obtenu par un codeur commandé par un clavier ou un bouton rotatif. Un inconvénient d'un tel générateur est que les signaux d'enveloppe et de porteuse ne sont pas synchrones. Par conséquent, les impulsions de porteuse correspondant au début et à la fin des trains peuvent être raccourcies par la modulation, ce qui provoque une perte d'information. Un autre inconvénient est que le générateur de trains d'impulsions n'est pas versatile et ne peut pas être réglé sur différentes fréquences de porteuse.

La présente invention vise à pallier aux inconvénients des générateurs connus.

L'invention vise, en particulier, à proposer un procédé et un dispositif programmable de génération de trains d'impulsions qui minimisent le recours à l'unité centrale de traitement.

L'invention vise également à rendre la fréquence des impulsions indépendante de la fréquence de travail de l'unité centrale.

Pour atteindre ces objets, la présente invention prévoit un procédé de génération de trains d'impulsions au moyen d'un microprocesseur, consistant :
à générer un signal d'enveloppe au moyen d'un compteur programmable par une unité centrale de traitement, la largeur de créneaux du signal d'enveloppe correspondant à la largeur des trains d'impulsions ;
à générer un signal de porteuse de fréquence déterminée programmable par l'unité centrale de traitement ; et
à moduler le signal d'enveloppe par la porteuse, la porteuse étant synchrone avec le signal d'enveloppe.

Selon un mode de réalisation de la présente invention, la largeur d'un créneau du signal d'enveloppe est un multiple entier de la période de la porteuse.

Selon un mode de réalisation de la présente invention, la porteuse est obtenue par division de fréquence d'un signal d'horloge externe.

Selon un mode de réalisation de la présente invention, la porteuse est obtenue par division de fréquence d'un signal d'horloge de l'unité centrale.

L'invention concerne également un générateur de trains d'impulsions comportant un microprocesseur pourvu d'une unité centrale de traitement et d'un compteur programmable, et un diviseur de fréquence programmable délivrant une porteuse de modulation d'un signal d'enveloppe généré par le compteur programmable, le diviseur programmable comportant une entrée d'initialisation recevant le signal d'enveloppe généré par le compteur.

Selon un mode de réalisation de la présente invention, une sortie du compteur programmable délivrant le signal d'enveloppe est envoyée sur une entrée d'une bascule dont une entrée d'horloge reçoit la porteuse fournie par le diviseur programmable, une sortie de la bascule étant envoyée sur une première entrée d'une porte logique de type ET dont une seconde entrée reçoit la porteuse et dont une sortie délivre les trains d'impulsions.

Selon un mode de réalisation de la présente invention, l'unité centrale est pilotée par un signal d'horloge délivré par un premier diviseur de fréquence préliminaire d'une fréquence externe, le diviseur programmable étant associé à un deuxième diviseur de fréquence préliminaire de la fréquence externe.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, schématiquement, un mode de réalisation d'un générateur de trains d'impulsions selon la présente invention ;
la figure 4 illustre, sous forme de chronogrammes, le fonctionnement d'un générateur tel que représenté à la figure 3 ; et
la figure 5 représente, sous forme de schéma-bloc, un mode de réalisation d'un générateur tel que représenté à la figure 3.

Pour des raisons de clarté, les mêmes éléments ont été désignés par les mêmes références aux différentes figures. Pour les mêmes raisons, seuls les éléments du générateur qui sont nécessaires à la compréhension de l'invention ont été représentés aux figures et seront décrits par la suite.

Selon l'invention, on associe à une unité centrale de traitement 1 et à un compteur programmable 2, un diviseur programmable 10 d'une fréquence d'horloge, par exemple, la fréquence d'horloge CLK0 de l'unité centrale 1. Le rôle du diviseur 10 est de fournir une porteuse P de modulation d'un signal d'enveloppe E délivré par le compteur 2 programmé par l'unité 1. Les signaux E et P, respectivement délivrés par le compteur 2 et par le diviseur 10, sont combinés, par exemple au sein d'une porte logique "ET" 11 qui délivre un signal S en forme de trains d'impulsions.

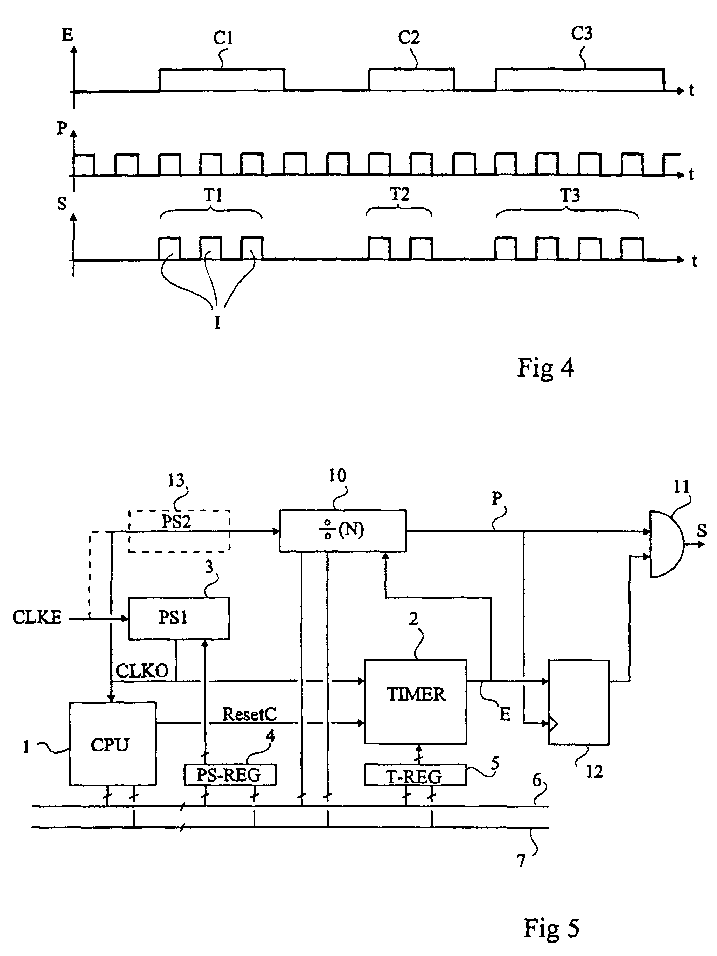

Le fonctionnement d'un générateur selon l'invention est illustré par la figure 4. Cette figure représente, sous forme de chronogrammes, un exemple de signaux P, E et S. Comme pour la figure 2, le signal CLK0 n'a pas été représenté pour des raisons de clarté.

Selon l'invention, le signal E est obtenu d'une manière similaire aux impulsions générées au moyen d'un circuit classique tel que représenté à la figure 1. Cependant, la largeur des créneaux C1, C2 et C3 du signal E correspond désormais à la largeur des trains d'impulsions souhaités, respectivement T1, T2 et T3. Le diviseur 10 fournit le signal P de modulation du signal E. La largeur des impulsions I est déterminée par la programmation du taux N de division du diviseur 10. De même, la fréquence et le rapport cyclique du signal E généré par le compteur 2 est programmable par l'unité centrale.

La figure 5 représente partiellement et sous forme de schéma-bloc un mode de réalisation d'un générateur tel que représenté à la figure 3.

Ce générateur comporte, comme le générateur classique de la figure 1, une unité centrale de traitement 1, un compteur programmable 2, un diviseur de fréquence préliminaire (PS1) 3 et deux registres 4 et 5.

Pour respecter la largeur des impulsions souhaitées, on veillera à ce que les impulsions I du signal P soient synchrones avec les fronts montants du signal E délivré par le compteur 2. Pour ce faire, le diviseur 10 est initialisé (ResetD) par un front montant du signal E. Le compteur 2 est quant à lui initialisé par l'unité 1 (ResetC).

Le diviseur 10 est programmé par l'unité 1, par exemple, par l'intermédiaire d'un registre (non représenté). Cette programmation intervient à chaque fois que l'on souhaite modifier la largeur des impulsions I.

De préférence, le signal E est envoyé sur une première entrée de la porte logique 11 par l'intermédiaire d'une bascule 12 pour que la largeur de chaque créneau C du signal E corresponde à un multiple entier de la porteuse de modulation, c'est-à-dire du signal P. Le signal P est envoyé, non seulement sur une deuxième entrée de la porte 11, mais également sur une entrée d'horloge de la bascule 12. Un front descendant du signal E n'est donc transmis à la porte 11 qu'à l'apparition d'un front montant du signal P. Ainsi, la sortie du compteur 2 est remise en forme pour correspondre à un multiple entier de la période du signal P. Cela garantit que la largeur de toutes les impulsions I d'un même train T1, T2 ou T3 est identique. Cela présente un intérêt particulier dans l'application aux télécommandes à infrarouge dans la mesure où cela garantit qu'une dernière impulsion d'un train ne soit pas coupée par le front descendant du signal E et, ainsi, de respecter le facteur de forme sur tout le train d'impulsions.

Le diviseur 10 est, par exemple, un diviseur programmable par un nombre (N) entier de la fréquence d'horloge CLK0 de l'unité centrale 1.

A titre de variante représentée en pointillés à la figure 5, le diviseur 10 est associé à un deuxième diviseur de fréquence préliminaire (PS2) 13 recevant, en entrée, le même signal d'horloge externe CLKE que le diviseur préliminaire 3. Le diviseur 13 est alors également programmable par l'unité 1 mais le signal d'horloge qu'il délivre peut être différent du signal CLK0.

Un avantage d'une telle variante est que le générateur peut alors s'adapter à différentes normes de fréquences d'impulsions, sans qu'il soit nécessaire de changer la fréquence externe. Par exemple, cela permet de s'adapter à différentes normes de fréquences d'impulsions de télécommandes à infrarouge.

Pour des raisons de clarté, on a supposé que la fréquence du compteur programmable 2 était la même que la fréquence de travail de l'unité centrale 1. Le compteur programmable 2 peut cependant être piloté par une fréquence inférieure à celle de l'unité 1, comme c'est souvent le cas en pratique et de manière classique.

De préférence, le générateur selon l'invention est programmable pour fonctionner, soit en modulant le signal d'enveloppe E par le signal P, soit en délivrant directement le signal E pour retrouver le fonctionnement d'un générateur classique. Pour ce faire, le signal S est, par exemple, délivré par l'intermédiaire d'un multiplexeur de sélection d'une entrée parmi deux entrées qui reçoivent, respectivement, le signal E et le signal de sortie de la porte 11.

Un avantage de la présente invention est que l'unité centrale de traitement n'a besoin d'écrire dans les registres 4 et 5 que deux fois par train d'impulsions.

Un autre avantage de la présente invention est qu'elle permet d'obtenir, pour une fréquence d'horloge CLK0 donnée, des impulsions I plus courtes qu'au moyen d'un générateur classique.

En effet, dans un générateur classique, la largeur minimale d'une impulsion est fixée par le nombre de cycles d'horloge CLK0 nécessaire pour procéder à la programmation du bit de contrôle dans le registre 4, puis à celle du seuil de comptage dans le registre 5.

Selon l'invention, ce nombre de cycles d'horloge nécessaire aux programmations des registres 4 et 5 correspond désormais à la largeur minimale d'un train d'impulsions. La programmation du diviseur 10 intervient uniquement quand on souhaite modifier la largeur des impulsions I, ce qui, en pratique, n'intervient pas dans une même séquence.

De plus, pour une fréquence d'impulsions donnée, la présente invention permet de réduire la fréquence de travail de l'unité centrale 1 et, ainsi, de diminuer la consommation du circuit qui est liée, notamment, à cette fréquence de travail. Cet avantage est particulièrement intéressant dans des applications où le circuit est alimenté par piles, comme c'est le cas d'une télécommande à infrarouge.

Bien entendu, la présente invention est susceptible de diverses variantes et modifications qui apparaîtront à l'homme de l'art. En particulier, la réalisation pratique du diviseur programmable 10 est à la portée de l'homme de l'art. De même, la programmation de l'unité centrale de traitement 1 en fonction des trains d'impulsions souhaités est à la portée de l'homme de l'art sur la base des indications fonctionnelles données ci-dessus. En outre, on notera que les registres 4 et 5, indiqués à titre d'exemple, pourront être remplacés par un registre unique et que l'organisation du contenu du ou des registres pourra être modifiée, pourvu qu'elle respecte les fonctionnalités décrites. On notera également que le compteur programmable 2 peut être un compteur classique quelconque.

## Revendications

1. Procédé de génération de trains d'impulsions numériques au moyen d'un microprocesseur, **caractérisé en ce qu'**il consiste :
à générer un signal d'enveloppe (E) au moyen d'un compteur (2) programmable par une unité centrale de traitement (1), la largeur de créneaux (C) du signal d'enveloppe (E) correspondant à la largeur des trains d'impulsions (T) ;
à générer un signal de porteuse (P) de fréquence déterminée programmable par l'unité centrale de traitement (1) ; et
à moduler le signal d'enveloppe (E) par la porteuse (P), la porteuse (P) étant synchrone avec le signal d'enveloppe (E).

2. Procédé selon la revendication 1, **caractérisé en ce que** la largeur d'un créneau (C) du signal d'enveloppe (E) est un multiple entier de la période de la porteuse (P).

3. Procédé selon la revendication 1 ou 2, **caractérisé en ce que** la porteuse (P) est obtenue par division de fréquence d'un signal d'horloge externe (CLKE).

4. Procédé selon la revendication 1 ou 2, **caractérisé en ce que** la porteuse (P) est obtenue par division de fréquence d'un signal d'horloge (CLK0) de l'unité centrale (1).

5. Procédé selon la revendication 4, **caractérisé en ce que** le signal d'horloge (CLK0) de l'unité centrale (1) est obtenu par division de fréquence d'un signal d'horloge externe (CLKE).

6. Générateur de trains d'impulsions comportant un microprocesseur pourvu d'une unité centrale de traitement (1) et d'un compteur programmable (2) par l'unité centrale de traitement, **caractérisé en ce qu'**il comporte un diviseur de fréquence programmable (10) par l'unité centrale de traitement et délivrant une porteuse (P) de modulation d'un signal d'enveloppe (E) généré par le compteur programmable (2), le diviseur programmable (10) comportant une entrée d'initialisation (ResetD) recevant le signal d'enveloppe (E) généré par le compteur (2).

7. Générateur selon la revendication 6, **caractérisé en ce qu'**une sortie du compteur programmable (2) délivrant le signal d'enveloppe (E) est envoyée sur une entrée d'une bascule (12) dont une entrée d'horloge reçoit la porteuse (P) fournie par le diviseur programmable (10), une sortie de la bascule (12) étant envoyée sur une première entrée d'une porte logique de type ET (11) dont une seconde entrée reçoit la porteuse (P) et dont une sortie (S) délivre les trains d'impulsions (T).

8. Générateur selon la revendication 6 ou 7, **caractérisé en ce que** l'unité centrale (1) est pilotée par un signal d'horloge (CLK0) délivré par un premier diviseur de fréquence préliminaire (3) d'une fréquence externe (CLKE), le diviseur programmable (10) étant associé à un deuxième diviseur de fréquence préliminaire (13) de la fréquence externe (CLKE).

## Claims

1. A method for generating digital pulse trains by means of a microprocessor, **characterized in that** it consists of:
generating an envelope signal (E) by means of a timer (2) which is programmable by a CPU (1), the width of a square wave (C) of the envelope signal (E) corresponding to the width of the pulse trains (T);
generating a carrier signal (P) having a predetermined frequency and programmable by the CPU (1); and
modulating the envelope signal (E) with the carrier (P), the carrier (P) being synchronous with the envelope signal (E).

2. A method according to claim 1, **characterized in that** the width of a square wave (C) of the envelope signal (E) is an integer multiple of the carrier period (P).

3. A method according to claim 1 or 2, **characterized in that** the carrier (P) is obtained by dividing the frequency of an external clock signal (CLKE).

4. A method according to claim 1 or 2, **characterized in that** the carrier (P) is obtained by dividing the frequency of a clock signal (CLK0) of the CPU (1).

5. A method according to claim 4, **characterized in that** the clock signal (CLK0) from the CPU (1) is obtained by dividing the frequency of an external clock signal (CLKE).

6. A pulse train generator including a microprocessor provided with a CPU (1) and a timer (2), **characterized in that** it includes a programmable frequency divider (10) issuing a carrier (P) for modulating an envelope signal (E) generated by the timer (2), the programmable divider (10) including a reset input (resetD) receiving the envelope signal (E) generated by the timer (2).

7. A generator according to claim 6, **characterized in that** an output of the timer (2) issuing the envelope signal (E) is sent on an input of a flip-flop (12), a clock input of which receives the carrier (P) supplied by the programmable divider (10), an output of the flip-flop (12) being sent on a first input of an AND-type logic gate (11), a second input of which receives the carrier (P) and an output (S) of which issues the pulse trains (T).

8. A generator according to claim 6 or 7, **characterized in that** the CPU (1) is monitored by a clock signal (CLK0) issued by a first prescaler (3) of an external frequency (CLKE), the programmable divider (10) being associated with a second prescaler (13) of the external frequency (CLKE).

## Patentansprüche

1. Ein Verfahren zur Erzeugung digitaler Impulsfolgen mittels eines Mikroprozessors, **dadurch gekennzeichnet, dass** Folgendes vorgesehen ist:
Erzeugen eines Umhüllungssignals (E) mittels einer Zeitsteuervorrichtung (2), die durch ein CPU (1) programmierbar ist, wobei die Breite einer Rechteckwelle (C) des Umhüllungssignals (E) der Breite der Impulsfolge (T) entspricht;
Erzeugen eins Trägersignals (P) mit einer vorbestimmten Frequenz und programmierbar durch die CPU (1); und
Modulieren des Umhüllungssignals (E) mit dem Träger (P), wobei der Träger (P) synchron mit dem Umhüllungssignal (E) ist.

2. Verfahren nach Anspruch 1, **dadurch gekennzeichnet, dass** die Breite der Rechteckwelle (C) des Umhüllungssignals (E) ein ganzzahliges Vielfaches der Trägerperiode (P) ist.

3. Verfahren nach Anspruch 1 oder 2, **dadurch gekennzeichnet, dass** der Träger (P) durch Teilen der Frequenz eines externen Takt- oder Clocksignals (CLKE) erhalten wird.

4. Verfahren nach Anspruch 1 oder 2, **dadurch gekennzeichnet, dass** der Träger (P) durch Dividieren der Frequenz eines Takt- oder Clocksignals (CLKO) der CPU (1) erhalten wird.

5. Verfahren nach Anspruch 4, **dadurch gekennzeichnet, dass** das Takt- oder Clocksignal (CLKO) von der CPU (1) durch Dividieren der Frequenz eines externen Takt- oder Clocksignals (CLKE) erhalten wird.

6. Impulsfolgengenerator mit einem Mikroprozessor, ausgestattet mit einer CPU (1) und einer Zeitsteuervorrichtung (2), **dadurch gekennzeichnet, dass** der Impulsfolgengenerator Folgendes aufweist:
einen programmierbaren Frequenzteiler (10), der einen Träger (P) zur Modulation eines Umhüllungssignals (E), erzeugt durch die Zeitsteuervorrichtung (2) ausgibt, wobei der programmierte Teiler (10) einen Rücksetzeingang (resetD) aufweist, und zwar zum Empfang des Umhüllungssignals (E), erzeugt durch die Zeitsteuervorrichtung (2).

7. Ein Generator nach Anspruch 6, **dadurch gekennzeichnet, dass** eine Ausgangsgröße der das Umhüllungssignal (E) abgebenden Zeitsteuervorrichtung (2) zu einem Eingang eines Flip-Flops (12) geschickt wird, dessen Takt- oder Clockeingang den Träger (P), geliefert durch den programmierbaren Teiler (10) empfängt, wobei eine Ausgangsgröße des Flip-Flops (12) an einen ersten Eingang eines UND-Logikgatters (11) angelegt wird, wobei ein zweiter Eingang desselben den Träger (P) empfängt und ein Ausgang (S) desselben die Impulsfolgen (T) abgibt.

8. Generator nach Anspruch 6 oder 7, **dadurch gekennzeichnet, dass** die CPU (1) durch ein Takt- oder Clocksignal (CLKO) überwacht wird, und zwar ausgegeben durch einen ersten Vor-Skallierer (3) einer externen Frequenz (CLKE), wobei der programmierbare Teiler (10) mit einem zweiten Vor-Skallierer (13) der externen Frequenz (CLKE) assoziiert ist.
